(19) Europäisches Patentamt
European Patent Office
Office européen des brevets

(11)  **EP 2 822 838 B1**

(12)  **EUROPÄISCHE PATENTSCHRIFT**

(45) Veröffentlichungstag und Bekanntmachung des Hinweises auf die Patenterteilung:
**22.06.2016  Patentblatt 2016/25**

(21) Anmeldenummer: **13708350.7**

(22) Anmeldetag: **05.03.2013**

(51) Int Cl.:
*B62D 5/00* (2006.01)          *B62D 5/04* (2006.01)
*B62D 15/02* (2006.01)

(86) Internationale Anmeldenummer:
**PCT/EP2013/000631**

(87) Internationale Veröffentlichungsnummer:
**WO 2013/131634 (12.09.2013 Gazette 2013/37)**

(54) **VERFAHREN ZUM AUTOMATISIERTEN EINPARKEN EINES MIT EINEM AKTIVEN PARKLENK-ASSISTENZSYSTEM UND EINER ÜBERLAGERUNGSLENKVORRICHTUNG AUSGESTATTETEN KRAFTFAHRZEUGS**

METHOD FOR AUTOMATICALLY PARKING A VEHICLE INCLUDING AN ACTIVE STEERING PARKING ASSISTANCE SYSTEM AND A STEERING SUPERPOSITION DEVICE

METHODE DE PARCAGE AUTOMATIQUE D'UN VEHICULE EQUIPE D'UN SYSTEME D'ASSISTANCE AU PARCAGE A BRAQUAGE ACTIF ET D'UN DISPOSITIF DE BRAQUAGE A SUPERPOSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2012  DE 102012004502**

(43) Veröffentlichungstag der Anmeldung:
**14.01.2015  Patentblatt 2015/03**

(73) Patentinhaber: **Audi AG**
**85045 Ingolstadt (DE)**

(72) Erfinder: **STARK, Sebastian**
**69469 Weinheim (DE)**

(74) Vertreter: **Thielmann, Frank**
**AUDI AG**
**Patentabteilung**
**85045 Ingolstadt (DE)**

(56) Entgegenhaltungen:
**EP-A1- 2 316 708          EP-A2- 1 927 529**
**WO-A1-2005/063550    US-A1- 2007 256 885**

**Beschreibung**

Die vorliegende Erfindung betrifft ein Verfahren zum automatisierten Einparken eines mit einem aktiven Parklenkassistenzsystem und einer Überlagerungslenkvorrichtung ausgestatteten Kraftfahrzeugs, ein Kraftfahrzeug, das eingerichtet ist zur Durchführung des Verfahrens sowie ein Computerprogrammprodukt.

In vielen Kraftfahrzeugen sind heute sogenannte Einparkassistenzsysteme vorhanden, die das Einparken des Kraftfahrzeugs in eine Parklücke für einen Fahrer erleichtern oder für diesen zur Gänze automatisiert durchführen.

Einparkassistenzsysteme verfügen üblicherweise über einen oder mehrere Sensoren, mit denen eine Umgebung des Kraftfahrzeugs nach Hindernissen und/oder Freiräumen abgesucht wird. Ist eine Parklücke erkannt, so liefert das Einparkassistenzsystem entweder Hinweise zum korrekten Einparken des Kraftfahrzeugs an den Fahrer oder führt - bei aktiven Parklenkassistenzsystemen - alle hierfür erforderlichen Vorgänge autark durch, wobei es die hierfür notwendigen Fahrzeugsysteme selbständig steuert.

So ist beispielsweise aus der DE 10 2006 052 575 A1 ein Parklenkassistent sowie ein Verfahren zum Unterstützen des Einparkens eines Kraftfahrzeugs bekannt. Der Parkleitassistent gemäß dieser Druckschrift umfasst mindestens einen Sensor zum Erfassen von Hindernissen und/oder Freiflächen in einer Umgebung quer zu einer Längsrichtung des Kraftfahrzeugs, eine mit dem mindestens einen Sensor gekoppelte Auswerte- und Steuereinheit zum Auswerten von Sensorsignalen des mindestens einen Sensors und Steuern von Fahrzeugsystemen, um in einem aktivierten automatischen Einparkmodus das Kraftfahrzeug in eine Parklücke ohne einen Lenkeingriff eines Fahrers einzuparken, wobei der automatische Einparkmodus mittels des Erfassens einer Handlung und/oder einer Kombination von Handlungen des Fahrers aktivierbar ist. Es ist gemäß dieser Druckschrift vorgesehen, dass der automatische Einparkmodus ohne eine Fahrereingabe zur Betätigung eines Einparkvorschlags direkt aktivierbar ist, sofern anhand der erfassten Hindernisse und/oder Freiflächen für eine Parklücke, in die das Kraftfahrzeug von seiner aktuellen Position aus automatisch eingeparkt werden kann, zuverlässig ermittelt ist, dass eine beim Einparken zu überfahrende Fläche auch unter Berücksichtigung von vorgegebenen Sicherheitsabständen und/oder Messtoleranzen des mindestens einen Sensors als frei von Hindernissen erkannt ist, und vor einer Aktivierbarkeit des automatischen Einparkmodus zur Bestätigung eines Einparkvorgangs vorgesehen ist, sofern die zu überfahrende Fläche nicht ausreichend als frei von Hindernissen erkannt ist.

Zur Durchführung eines automatisierten Einparkvorgangs durch ein aktives Parklenkassistenzsystem bedarf es neben dem eigentlichen Einparkassistenten zumindest noch einer entsprechend ausgestalteten Fahrzeuglenkvorrichtung, die ein automatisiertes Lenken ermöglicht.

Ein Beispiel für eine derartige Fahrzeuglenkvorrichtung ist aus der DE 10 2005 005 425 A1 bekannt. In dieser Druckschrift wird eine Lenkvorrichtung vorgeschlagen, mit einer vom Fahrer betätigbaren Lenkhandhabe, einem Lenkgetriebe, das die Drehbewegung einer Eingangswelle in eine Schiebebewegung einer Spurstange umsetzt, einem zwischen Lenkgetriebe und Lenkhandhabe angeordneten Überlagerungsgetriebe, das eine mit der Lenkhandhabe in Wirkverbindung stehende erste Welle, ein mit dem Lenkgetriebe in Wirkverbindung stehende zweite Welle und eine von einem Aktor antreibbare dritte Welle aufweist. Gemäß dieser Druckschrift ist vorgesehen, dass eine vierte Welle bei Bedarf über ein Schaltelement mit einem fahrzeugfesten Widerlager zumindest teilweise verbindbar ist. Ist das Schaltelement geschlossen, ist ein automatisches Ein- und Ausparken möglich.

Bei den aktiven Parklenkassistenzsystemen nach dem Stand der Technik wird somit bei einem automatisierten Einparkvorgang die Lenkbewegung der Räder von einer intelligent vernetzten Servolenkung erzeugt. Während des Einparkvorgangs wird die von der Servolenkung erzeugte Lenkbewegung auch an das Lenkrad (oder allgemeiner ausgedrückt an die Lenkhandhabe) übertragen, d.h. das Lenkrad bewegt sich während des automatisierten Einparkvorgangs entsprechend der jeweiligen Veränderung des Radwinkels mit.

Um eine mögliche Verletzungsgefahr für den Fahrer durch das sich drehende Lenkrad zu minimieren, sollte die Bewegung des Lenkrads während des automatisierten Einparkvorgangs eine gewisse Geschwindigkeit nicht überschreiten. Hierdurch ergibt sich eine in technischer Hinsicht an und für sich nicht erforderliche Beschränkung in Bezug auf die Geschwindigkeit der Lenkbewegungen und somit auch in Bezug auf die Gesamtdauer des automatisierten Einparkvorgangs. Auch kann die "geisterhafte" Bewegung des Lenkrads während eines automatisierten Einparkvorgangs von einem Fahrer als irritierend empfunden werden.

Die EP 2 316 708 A1 ist als nächstliegender Stand der Technik nach dem Oberbegriff des Anspruchs 1 zu sehen und beschreibt ein aktives Lenksystem für Kraftfahrzeuge, das eine elektrische Servolenkung und eine Überlagerungslenkung mit zugehörigen Aktoren umfasst und bei dem mehrere das Fahrverhalten beeinflussende Einzelsysteme Lenkanforderungen erzeugen. Es ist ein Lenkkoordinator-System zur Erzeugung von Steuersignalen für die Aktoren der Servolenkung und der Überlagerungslenkung vorgesehen, das auf der Basis der vorliegenden Lenkanforderungen diese Steuersignale erzeugt.

Es ist Aufgabe der vorliegenden Erfindung, die oben erwähnten Nachteile des Stands der Technik zumindest teilweise zu überwinden. Die erfindungsgemäße Aufgabe wird gelöst durch das Verfahren gemäß Anspruch 1, das Kraftfahrzeug gemäß Anspruch 5 sowie das Computerprogrammprodukt gemäß Anspruch 9. Vorteilhafte Weiterbildungen der Erfindung sind Gegenstand der Unteransprüche.

Erfindungsgemäß wird ein Verfahren zum automatisierten Einparken eines mit einem aktiven Parklenkassistenzsystem und einer Überlagerungslenkvorrichtung ausgestatteten Kraftfahrzeugs vorgeschlagen, das die folgenden Schritte umfasst:

(a) Ermittlung eines aktuellen Radwinkels oder eines aktuellen Lenkradwinkels des Kraftfahrzeugs;
(b) Erzeugung einer dynamischen Winkelvorgabe durch das Parklenkassistenzsystem und Übergabe der dynamischen Winkelvorgabe als Eingangssignal für eine Steuervorrichtung einer Fahrzeuglenkvorrichtung und für eine Steuervorrichtung der Überlagerungslenkvorrichtung;
(c) Steuern der Fahrzeuglenkvorrichtung derart, dass der Radwinkel entsprechend der dynamischen Winkelvorgabe geändert wird;
(d) Steuern der Überlagerungslenkvorrichtung derart, dass ein Überlagerungswinkel erzeugt wird, durch den die durch die Steuerung der Fahrzeuglenkvorrichtung eigentlich bewirkte Änderung des Lenkradwinkels zumindest teilweise kompensiert wird, und
(e) bei einem Abbruch oder nach einer Beendigung des automatisierten Einparkvorgangs die Überlagerungslenkvorrichtung derart gesteuert wird, dass ein Fehlwinkel zwischen Lenkradwinkel und Radwinkel durch eine Winkelsynchronisation abgebaut wird, wobei bis zum vollständigen Abbau des Fehlwinkels zwischen Lenkradwinkel und Radwinkel

(m) einem Fahrer des Kraftfahrzeugs eine Warnung signalisiert wird;
(n) einem Fahrer des Kraftfahrzeugs der aktuelle Radwinkel signalisiert wird; und/oder
(o) ein Anfahren des Fahrzeugs verhindert wird.

In vielen modernen Fahrzeugen sind sowohl aktive Parklenkassistenzsysteme als auch sog. Überlagerungslenkvorrichtungen vorhanden.

Durch eine Überlagerungslenkvorrichtung wird dem Lenkradwinkel ein Winkel überlagert, der Drehwinkel am Eingang des Lenkgetriebes entspricht somit nicht mehr dem Winkel des Lenkrads. Hierdurch ist eine stufenlose Anpassung der Lenkübersetzung möglich: Für Rangieren bei geringen Geschwindigkeiten ist eine direktere Übersetzung einstellbar, so dass der Fahrer beispielsweise beim Parken weniger Lenkradumdrehungen benötigt. Bei schneller Fahrt ist mittels einer Überlagerungslenkvorrichtung eine weniger direkte Übersetzung einstellbar, so dass ein Fahrer das Fahrzeug feinfühliger kontrollieren kann.

Eine Überlagerungslenkvorrichtung umfasst üblicherweise ein Überlagerungsgetriebe, einen Elektromotor zum Antreiben des Überlagerungsgetriebes sowie eine Arretier- bzw. Bremsvorrichtung. Als Überlagerungsgetriebe kommen üblicherweise entweder ein Planetengetriebe oder ein Harmonic-Drive-Getriebe zum Einsatz.

Aus der DE 10 2005 008 652 A1 ist eine Lenkvorrichtung mit einer an einer Lenksäule angeordneten Lenkhandhabe und mit einem Lenkgetriebe zur Verstellung von lenkbaren Fahrzeugrädern eines Fahrzeugs, sowie mit einer Überlagerungsgetriebeeinheit und einem Stellantrieb bekannt. Gemäß dieser Druckschrift sind eine Eingangswelle der Überlagerungsgetriebeeinheit mit der Lenkhandhabe und eine Ausgangswelle der Überlagerungsgetriebeeinheit mit dem Lenkgetriebe verbunden und ist die Überlagerungsgetriebeeinheit zur Winkelstellung und zur Momentenstellung ausgebildet. Ein kompakter Aufbau mit weniger Bauteilen ist gemäß dieser Druckschrift zu erreichen, wenn die Überlagerungsgetriebeeinheit als Vierwellengetriebe mit einer ersten und einer zweiten Stellwelle ausgebildet und die eine der Stellwellen zur Winkelstellung frei drehbar und zur Momentenstellung bremsbar und/oder arretierbar ist.

Und aus der DE 10 2006 049 181 A1 ist eine Überlagerungsvorrichtung eines Lenksystems eines Fahrzeugs mit einem eine erste, eine zweite und eine dritte Getriebewelle aufweisenden Überlagerungsgetriebe bekannt. Gemäß dieser Druckschrift weist eine Kopplungseinrichtung eine elektrisch ansteuerbare Umschalteinheit auf, die zum Umschalten wenigstens eines Kopplungsstücks zwischen einer die erste Getriebewelle mit der dritten Getriebewelle drehfest koppelnden Kopplungsstellung und einer die erste und die dritte Getriebewelle freigebenden Entkopplungsstellung dient. Das wenigstens eine Kopplungsstück ist drehfest mit der ersten Getriebewelle verbunden, und die elektrische Energie benötigenden elektrischen Bestandteile der Umschalteinrichtung sind drehfest gegenüber dem Fahrzeugaufbau angeordnet.

Ebenfalls erlaubt eine Überlagerungslenkung schnelle fahrdynamische Eingriffe, indem während der Fahrt bei gleichbleibendem Lenkradwinkel der Radwinkel verändert wird. Diese Funktionalität wird im Rahmen einer Fahrdynamikregelung eingesetzt.

So ist beispielsweise aus der DE 10 2006 023 562 A1 Verfahren zum kennlinien- oder kennfeldabhängigen Variieren der Winkelübersetzung zwischen einem Lenkradwinkel eines Lenkrads und dem Radlenkwinkel der für die Fahrzeuglenkung verantwortlichen Räder eines Kraftfahrzeugs mit einem aktiven Lenksystem mit einer über eine Steuerungseinrichtung gesteuerten Einrichtung zum Einstellen des Radlenkwinkels in Abhängigkeit des Lenkradwinkels bekannt. Gemäß dieser Druckschrift steuert die Steuerungseinrichtung die Einrichtung zum Einstellen des Randlenkwinkels in Abhängigkeit wenigstens zweier Kennlinien oder Kennfelder, denen unterschiedliche Winkelübersetzungen zwischen dem Lenkradwinkel und dem Radlenkwinkel zugeordnet sind, und ist vom Fahrer manuell oder automatisch eine der Kennlinien oder eines der Kennfelder auswählbar, wobei nach Auswahl einer der weiteren Steuerung zugrunde zu legenden Kennlinie oder eines Kennfelds bei gegebener Auslenkung des Lenkrads aus der Nullstellung die Einrichtung zum Einstellen des Radlenkwinkels in Abhängigkeit der erfassten Lenkradbewegung des nach dem Auswählen der Kennlinie oder des Kennfelds bewegten Lenkrads oder einer nach dem Auswählen der Kennlinie oder des Kennfelds erfassten Zeitspanne zur schrittweisen oder linearen Veränderung der Winkelübersetzung von der der vormals gewählten Kennlinie oder dem vormals gewählten Kennfeld zugeordneten Winkelübersetzung auf die der neu gewählten Kennlinie oder dem neu gewählten Kennfeld zugeordnete Winkelübersetzung angesteuert wird.

Und aus der DE 10 2007 000 976 A1 ist ein Verfahren zum Ansteuern einer Überlagerungslenkung bekannt, wobei eine Lenkübersetzung in Abhängigkeit der Fahrgeschwindigkeit erfolgt, wobei das Maß einer zeitlichen Verzögerung in Abhängigkeit der Fahrgeschwindigkeit eingestellt wird.

Beim erfindungsgemäßen Verfahren ist nun in besonders vorteilhafter Weise vorgesehen, dass die Überlagerungslenkvorrichtung dazu verwendet und derart gesteuert wird, dass ein Überlagerungswinkel erzeugt wird, durch den die durch die Steuerung der Fahrzeuglenkvorrichtung eigentlich bewirkte Änderung des Lenkradwinkels zumindest teilweise kompensiert wird.

Hierdurch ist es zum ersten Mal möglich, einen automatisierten Einparkvorgang bei einem Kraftfahrzeug durchzuführen, bei dem die durch die Fahrzeuglenkvorrichtung zur Einstellung der benötigten Radwinkel durchgeführten Drehbewegungen der Lenksäule zumindest teilweise kompensiert werden, d.h. das Lenkrad bewegt sich während des Einparkvorgangs nicht oder nur in einem im Vergleich zum Stand der Technik verringerten Ausmaß. Hierdurch können die oben geschilderten Nachteile des Stands der Technik auf einfache Weise überwunden werden.

Gemäß einer ersten vorteilhaften Weiterbildung der Erfindung ist die Fahrzeuglenkvorrichtung eine Servolenkvorrichtung, bevorzugt eine intelligent vernetzte Servolenkvorrichtung.

Zur zumindest teilweisen Kompensation des durch die Steuerung der Fahrzeuglenkvorrichtung eigentlich bewirkten Änderung des Lenkradwinkels kann gemäß einer weiteren vorteilhaften Weiterbildung der Erfindung die Überlagerungslenkvorrichtung derart gesteuert werden, dass die durch das Parklenkassistenzsystem erzeugte dynamische Winkelvorgabe (f) komplett, (g) teilweise und linear, oder (h) komplett oder teilweise in Abhängigkeit eines ein- oder mehrdimensionalen Kennfeldes kompensiert wird.

Bei einer kompletten Kompensation des durch die Steuerung der Fahrzeuglenkvorrichtung eigentlich bewirkten Änderung des Lenkradwinkels wird der Überlagerungswinkel derart gesteuert, dass die Überlagerungslenkvorrichtung einen Überlagerungswinkel erzeugt, der die durch die dynamische Winkelvorgabe eigentlich erzeugte Drehbewegung des Lenkrads zu 100% kompensiert.

Bei einer solchen kompletten Kompensation der dynamischen Winkelvorgabe bewegt sich somit das Lenkrad eines Kraftfahrzeugs während eines automatischen Einparkvorgangs nicht, verbleibt also in der Position, die es beim Start des automatischen Einparkvorgangs inne hatte.

Entsprechend wird bei einer teilweisen und linearen Kompensation des durch die Steuerung der Fahrzeuglenkvorrichtung eigentlich bewirkten Änderung des Lenkradwinkels der Überlagerungswinkel derart gesteuert, dass die Überlagerungslenkvorrichtung einen Überlagerungswinkel erzeugt, der die durch die dynamische Winkelvorgabe eigentlich erzeugte Drehbewegung des Lenkrads zwischen >0% und <100% kompensiert. Selbstverständlich kann bei einer teilweisen und linearen Kompensation jeder beliebige Wert innerhalb des oben angegebenen Bereichs verwendet werden. Und es können selbstverständlich verschiedenste %-Bereiche innerhalb des oben angegebenen %-Bereichs vorgegeben sein. So kann beispielsweise bei dem erfindungsgemäßen Verfahren bei einer teilweisen und linearen Kompensation der dynamischen Winkelvorgabe diese innerhalb eines Bereichs kompensiert werden, der durch eine Auswahl von zwei beliebigen verschiedenen Werten aus der folgenden Liste gebildet werden kann: >0%, 5%, 10%, 15%, 20%, 25%, 30%, 35%, 40%, 45%, 50%, 55%, 60%, 65%, 70%, 75%, 80%, 85%, 90%, 95%, <100%. Als Beispiele für geeignete Bereiche seien hier erwähnt eine Kompensation im Bereich von 20% bis <100%, 30% bis <100%, 40% bis <100%, 50% bis <100%, 60% bis <100%, 70% bis <100%, 80% bis <100%, 90% bis <100%.

Mit den angegebenen Prozentangaben wird ausgedrückt, um welches Ausmaß sich das Lenkrad beim erfindungsgemäßen Verfahren weniger bewegt, als bei einem automatischen Einparkvorgang nach dem Stand der Technik. Eine Kompensation um 50% bedeutet demnach, dass das Lenkrad über den gesamten Ablauf des erfindungsgemäßen Verfahrens lediglich 50% der Bewegungen (Drehbewegungen) macht, den ein Lenkrad bei einem automatischen Einparkvorgang nach dem Stand der Technik vollführt.

Bei einer kompletten oder teilweisen Kompensation des durch die Steuerung der Fahrzeuglenkvorrichtung eigentlich bewirkten Änderung des Lenkradwinkels in Abhängigkeit eines ein- oder mehrdimensionalen Kennfeldes wird der Überlagerungswinkel derart gesteuert, dass die dynamische Winkelvorgabe in Abhängigkeit von vorgebbaren Einflussfaktoren kompensiert wird. Derartige Einflussfaktoren können beispielsweise der aktuelle Radwinkel, der aktuelle Radwinkel beim Start des Einparkvorgangs oder der eingestellte Fahrmodus (z.B. Drive Select (Audi), Driving Experience Control (BMW), Sportmodus (Porsche)) sein.

Bei einer kompletten oder teilweisen Kompensation des durch die Steuerung der Fahrzeuglenkvorrichtung eigentlich bewirkten Änderung des Lenkradwinkels in Abhängigkeit eines ein- oder mehrdimensionalen Kennfeldes wird eine Bewegung des Lenkrads während des automatischen Einparkvorgangs entweder zu 100% oder in einem Bereich zwischen >0% und <100% verhindert, jeweils bezogen auf die Bewegung des Lenkrads, das dieses ohne eine erfindungsgemäße Kompensation machen würde. Bezüglich der Kompensationswerte und -bereiche gilt das oben bezüglich einer teilweisen und linearen Kompensation ausgeführte.

Bei einem Abbruch oder nach einer Beendigung des automatisierten Einparkvorgangs kann ein Fehlwinkel zwischen Lenkradwinkel und Radwinkel gegeben sein, d.h. der Lenkradwinkel kann nicht zum Radwinkel "passen", oder anders ausgedrückt, der Fahrer eines Kraftfahrzeugs kann aufgrund der Stellung des Lenkrads auf einen Radwinkel schließen, der nicht den tatsächlichen Gegebenheiten entspricht. Daher sollte aus Sicherheitsgründen ein bei einem Abbruch oder nach einer Beendigung des automatisierten Einparkvorgangs möglicherweise gegebener Fehlwinkel zwischen dem Lenkradwinkel und dem Radwinkel abgebaut werden, d.h. es sollte gewährleistet sein, dass der Lenkradwinkel - möglichst rasch - wieder zum Radwinkel "passt".

Daher ist erfindungsgemäß vorgesehen, dass bei einem Abbruch oder nach einer Beendigung des automatisierten Einparkvorgangs (e) die Überlagerungslenkvorrichtung derart gesteuert wird, dass ein Fehlwinkel zwischen Lenkradwinkel und Radwinkel durch eine Winkelsynchronisation abgebaut wird. Hierzu kann grundsätzlich eine Rückgängigmachung von Schritt d) des erfindungsgemäßen Verfahrens dienen. Selbstverständlich ist eine solche Steuerung nicht erforderlich, sofern kein Fehlwinkel gegeben ist.

Der Abbruch eines automatischen Einparkvorgangs wird üblicherweise vom Parklenkassistenzsystem bzw. dem darin enthaltenen Einparkassistenten auf einem Datenbus über ein entsprechendes Signal kommuniziert. Gleiches gilt, wenn der automatische Einparkvorgang erfolgreich abgeschlossen wurde.

Sobald das entsprechende Signal kommuniziert wurde, sollte die Überlagerungslenkvorrichtung bei Vorliegen eines Fehlwinkels in die Winkelsynchronisation übergehen. Eine solche Winkelsynchronisation kann auf verschiedene Weisen erfolgen.

So kann die Winkelsynchronisation mittels (i) einer sofortigen Rückgängigmachung des Fehlwinkels, (k) einem automatisierten Abrampen des Fehlwinkels mittels einer definierten Traktorie, oder (l) mittels einer Synchronisierungsfunktion in Abhängigkeit von Lenkbewegungen am Lenkrad erreicht werden.

Unter einer "sofortigen" Rückgängigmachung der Kompensation des Fehlwinkels ist vorliegend eine Rückgängigmachung zu verstehen, bei der ab Signalisierung des Abbruchs oder der Beendigung des automatischen Einparkvorgangs bis zur vollständigen Winkelsynchronisation eine Zeitdauer von etwa 5 Sekunden oder kürzer, bevorzugt etwa 3 Sekunden oder kürzer, noch bevorzugter etwa 2 Sekunde oder kürzer benötigt wird.

Die Winkel und Winkelvorgaben innerhalb der Fahrzeuglenkvorrichtung, Überlagerungslenkvorrichtung, und des aktiven Parklenkassistenzsystems bilden eine Traktorie bzw. einen Bewegungspfad. Der Fehlwinkel kann unter Verwendung dieser Traktorie automatisiert abgerampt werden.

Ein Abbau des Fehlwinkels mittels einer Synchronisierungsfunktion in Abhängigkeit von Lenkbewegungen am Lenkrad kann beispielsweise unter zu Hilfenahme der technischen Lehre erfolgen, die in der oben erwähnten DE 10 2006 023 562 A1 offenbart ist.

Wie oben bereits erläutert, kann der Fahrer eines Kraftfahrzeugs nach einem Abbruch eines erfindungsgemäßen automatischen Einparkvorgangs oder nach dessen (erfolgreicher) Beendigung aus dem Lenkradwinkel nicht unbedingt auf den Radwinkel schließen. Sofern und solange ein Fehlwinkel zwischen Lenkradwinkel und Radwinkel besteht, könnte ein Fahrer beim Losfahren von der Bewegungsrichtung des Kraftfahrzeugs überrascht werden, da die Bewegungsrichtung des Kraftfahrzeugs von derjenigen abweicht, von der der Fahrer aufgrund des Lenkradwinkels ausgegangen ist. Hierdurch besteht die Gefahr eines Unfalls, muss der Fahrer das Kraftfahrzeug rasch abbremsen, oder muss der Fahrer zusätzliche Lenkbewegungen zur Korrektur der Bewegungsrichtung des Kraftfahrzeugs durchführen. Daher ist erfindungsgemäß weiter vorgesehen, dass bis zum bis zum vollständigen Abbau eines Fehlwinkels zwischen Lenkradwinkel und Radwinkel

(m) einem Fahrer des Kraftfahrzeugs eine Warnung signalisiert wird;

(n) einem Fahrer des Kraftfahrzeugs der aktuelle Radwinkel signalisiert wird; und/oder

(o) ein Anfahren des Fahrzeugs verhindert wird.

Das Signalisieren einer Warnung kann auf optische und/oder akustische Weise erfolgen, beispielsweise durch ein blinkendes Signal und/oder einen Warnton. Die Signalisierung des aktuellen Radwinkels kann auf optische Weise durch eine Anzeigevorrichtung, beispielsweise durch ein Display im Bereich des Armaturenbretts oder durch ein Head-Up-Display erfolgen. Auf der Anzeigevorrichtung könnte beispielsweise im einfachsten Fall eine strichartige Darstellung angezeigt werden, die dem Fahrer den aktuellen Radwinkel relativ zur Längsachse des Fahrzeugs anzeigt. Neben einer Signalisierung des aktuellen Radwinkels kann selbstverständlich auch eine Signalisieren einer Warnung erfolgen.

Die größte Sicherheit für das Fahrzeug und andere Verkehrsteilnehmer wird erreicht, wenn - wie dies gemäß obiger Option o) vorgesehen ist - bis zum vollständigen Abbau des Fehlwinkels zwischen Lenkradwinkel und Radwinkel ein Anfahren des Fahrzeugs verhindert wird. Die hierzu erforderlichen Vorrichtungen und Verfahren sind einem Fachmann bekannt, so dass hierauf nicht eingegangen werden muss.

Die vorliegende Erfindung umfasst auch ein Kraftfahrzeug mit einem aktiven Parklenkassistenzsystem und einer Überlagerungslenkvorrichtung bei dem

(a') das Parklenkassistenzsystem dazu eingerichtet ist, eine dynamische Winkelvorgabe zu erzeugen und diese als Eingangssignal für eine Steuervorrichtung der Fahrzeuglenkvorrichtung und für eine Steuervorrichtung der Überlagerungslenkvorrichtung zu übergeben;

(b') die Steuervorrichtung für die Fahrzeuglenkvorrichtung dazu eingerichtet ist, die Fahrzeuglenkvorrichtung derart zu steuern, dass der Radwinkel durch die Fahrzeuglenkvorrichtung entsprechend der dynamischen Winkelvorgabe geändert wird;

(c') die Steuervorrichtung für die Überlagerungslenkvorrichtung dazu eingerichtet ist, die Überlagerungslenkvorrichtung derart zu steuern, dass durch die Überlagerungslenkvorrichtung ein Überlagerungswinkel erzeugt wird, durch den die durch die Steuerung der Fahrzeuglenkvorrichtung eigentlich bewirkte Änderung des Lenkradwinkels zumindest teilweise kompensiert wird; und

(e') die Steuervorrichtung für die Überlagerungslenkvorrichtung dazu eingerichtet ist, bei einem Abbruch oder nach einer Beendigung des automatisierten Einparkvorgangs die Überlagerungslenkvorrichtung derart zu steuern, dass der Fehlwinkel zwischen Lenkradwinkel und Radwinkel durch eine Winkelsynchronisation abgebaut wird, wobei das Fahrzeug weiter dazu eingerichtet ist, bis zum vollständigen Abbau des Fehlwinkels zwischen Lenkradwinkel und Radwinkel

(m') einem Fahrer des Kraftfahrzeugs eine Warnung zu signalisieren;

(n') einem Fahrer des Kraftfahrzeugs den aktuellen Radwinkel zu signalisieren; und/oder

(o') ein Anfahren des Fahrzeugs zu verhindern.

Gemäß einer ersten vorteilhaften Weiterbildung ist bei dem erfindungsgemäßen die Fahrzeuglenkvorrichtung eine Servolenkvorrichtung.

Gemäß einer weiteren vorteilhaften Weiterbildung ist bei dem erfindungsgemäßen Kraftfahrzeug die Steuervorrichtung für die Überlagerungslenkvorrichtung dazu eingerichtet, zur zumindest teilweisen Kompensation des durch die Steuerung der Fahrzeuglenkvorrichtung eigentlich bewirkten Änderung des Lenkradwinkels die Überlagerungslenkvorrichtung derart anzusteuern, dass die dynamische Winkelvorgabe (f') komplett, (g') teilweise und linear, oder (h') komplett oder teilweise in Abhängigkeit eines ein- oder mehrdimensionalen Kennfeldes kompensiert wird.

Gemäß einer noch weiteren vorteilhaften Weiterbildung ist bei dem erfindungsgemäßen Kraftfahrzeug die Steuervorrichtung für die Überlagerungslenkvorrichtung dazu eingerichtet, die Überlagerungslenkvorrichtung derart zu steuern, das der Fehlwinkel mittels (i') einer sofortigen Aufhebung der Kompensation der dynamischen Winkelvorgabe, (k') einem automatisierten Abrampen des Fehlwinkels mittels einer definierten Traktorie, oder (l') einer Synchronisierungsfunktion in Abhängigkeit von Lenkbewegungen am Lenkrad abgebaut wird.

Des Weiteren umfasst die vorliegende Erfindung ein Computerprogrammprodukt mit einem Computerprogramm, das Programmcodemittel zur Durchführung des erfindungsgemäßen Verfahrens nach einem der Ansprüche 1 bis 4 aufweist, wenn das Computerprogramm in einem Mikroprozessor ausgeführt wird.

Das zur Erläuterung der verschiedenen Begriffe in Bezug auf das erfindungsgemäße Verfahren ausgeführte gilt sinngemäß auch für das erfindungsgemäße Kraftfahrzeug und das erfindungsgemäße Computerprogrammprodukt.

Weitere Merkmale der Erfindung ergeben sich aus den Ansprüchen, der Figur und der Figurenbeschreibung. Die vorstehend in der Beschreibung genannten Merkmale und Merkmalskombinationen wie auch die in der Figurenbeschreibung genannten Merkmale und Merkmalskombinationen und/oder die in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Anhand eines Ausführungsbeispiels wird die Erfindung im Folgenden näher erläutert. Dieses Ausführungsbeispiel dient lediglich zum noch besseren Verständnis der vorliegenden Erfindung, die Erfindung ist selbstverständlich nicht auf dieses Ausführungsbeispiel beschränkt.

Die Figur zeigt rein schematisch und nicht maßstabsgerecht eine Anordnung aus Lenkrad (1) mit Winkel delta_LWI ((a)), Lenksäule (2), Überlagerungslenkvorrichtung (3) mit i_Ü ((e)), delta_Ü ((d)), delta _Ü_PLA ((c)) und gegebenenfalls delta_Ü_VSR ([(b)]), sowie Servolenkung (4) mit i_EPS ((g)), delta_Ritzel ((f)) und delta_Rad ((h)).

Im nachfolgenden wird ein Beispiel für eine technische Umsetzung des erfindungsgemäßen Verfahrens beschrieben:

Auf einem Bussystem eines Fahrzeugs werden folgende bekannte Signale verwendet:

delta_PLA:     Winkelvorgabe vom Softwaremodul des Parklenkassistenten (PLA)

| delta_LWI: | Aktueller Lenkradwinkel vom Lenkwinkelsensor, Servolenkung (4) oder anderweitiger Sensoren zur Bestimmung des aktuellen Lenkradwinkels |
|---|---|
| delta_Ü_PLA: | Überlagerungswinkel der Überlagerungslenkvorrichtung (3) bei PLA Ausgleichsbewegung |
| delta_Ü_VSR: | Überlagerungswinkel laut Kennfeld "variable Lenkübersetzung" |
| delta_Ü: | Gesamtüberlagerungswinkel der Überlagerungslenkvorrichtung (3) delta_Ü = delta_Ü_PLA/i_Ü + delta_Ü_VSR |
| delta-Ritzel: | Winkel, welcher am Ritzel der Zahnstange des Lenksystems anliegt. Dieser Winkel bestimmt über die Lenkübersetzung des Lenkgetriebes direkt den Radwinkel. delta_Ritzel = delta_Ü * i_Ü + delta_LWI |
| delta_Rad: | Radwinkel delta_Rad = delta_Ritzel * i_EPS |
| i_Ü: | Getriebegrundübersetzung der Überlagerungslenkvorrichtung (3) (z.B. 50:51) |
| i_EPS: | Getriebegrundübersetzung der Lenkung (z.B. 1:16) |

Bezüglich delta_Ü_VSR sei hier ergänzend auf die Offenbarung in der DE 10 2006 023 562 B4 und DE 10 2007 000 976 A1 hingewiesen.

Alle Winkel(-vorgaben) sind dynamisch/zeitabhängig und bilden damit jeweils eine Traktorie/einen Bewegungspfad. Die Winkel(-vorgaben) stehen in Abhängigkeit zueinander.

Während eines Einparkvorgangs wird eine vom Softwaremodul des Parklenkassistenten eine dynamische Winkelvorgabe delta_PLA erzeugt. Diese Winkelvorgabe delta_PLA wird z.B. von der Servolenkung (4) umgesetzt, d. h. die Größe delta_Ritzel wird von der Servolenkung (4) aktiv entsprechend der Vorgabe delta_PLA gesteuert/geregelt.

Diese Winkelvorgabe delta_PLA dient auch als Eingangssignal für die Überlagerungslenkvorrichtung (3). Die Winkelvorgabe delta_PLA wird über ein Softwaremodul verrechnet.

Weiterhin ist der aktuelle Lenkradwinkel bekannt, entweder mittels eines Lenkwinkelsensor oder vom Servolenksystem (4) zurückgerechnet unter Verwendung von delta_Ritzel und delta_Ü_PLA.

Damit sind folgende Kompensationsmöglichkeiten möglich:

- Komplette Kompensation
  Der Überlagerungswinkel wird derart gesteuert, dass die Winkelvorgabe delta_PLA komplett kompensiert wird. D. h. die Überlagerungslenkvorrichtung (3) erzeugt einen Überlagerungswinkel delta_Ü_PLA der der Winkelvorgabe delta_PLA mit umgekehrter Drehrichtung mit voller Amplitude entspricht delta_Ü_PLA = delta_PLA * (-1)
- Lineare Kompensation
  Der Überlagerungswinkel wird derart gesteuert, dass die Winkelvorgabe delta_PLA teilweise und linear kompensiert wird. D.h. die Überlagerungslenkvorrichtung (3) erzeugt einen Überlagerungswinkel delta_Ü_PLA der der Winkelvorgabe delta-PLA mit umgekehrter Drehrichtung mit reduzierter Amplitude.

$$\text{delta\_Ü\_PLA} = \text{delta\_PLA} * \text{Faktor} * (-1) \text{ mit Faktor } [>0 \ldots <1]$$

- vollständige oder teilweise Kompensation in Abhängigkeit eines Kennfeldes (ein- oder mehrdimensional)
  Der Überlagerungswinkel wird derart gesteuert, dass die Winkelvorgabe delta_PLA in Abhängigkeit von Einflussfaktoren kompensiert wird. D.h. die Überlagerungslenkvorrichtung (3) erzeugt einen Überlagerungswinkel delta_Ü_PLA, der der Winkelvorgabe delta_PLA mit umgekehrter Drehrichtung mit einer Amplitude die von Einflussfaktoren abhängt.

$$\text{delta\_Ü\_PLA} = \text{delta\_PLA} * (\text{Kennfeld (Einflussfaktoren)}) * (-1) \text{ mit Kennfeldwerten } [0 \ldots 1]$$

Beispiele für mögliche Einflussfaktoren sind z.B. der aktuelle Lenkradwinkel delta_LWI ((a)), der Lenkradwinkel beim Start des Einparkvorgangs delta-LWI (t0), und ein gewählter Fahrmodus (Drive Select).

Sofern in der vorliegenden Anmeldung Vorrichtungen, Einrichtungen und Elemente als voneinander getrennte Vorrichtungen, Einrichtungen und Elemente beschrieben sind, so brauchen diese Vorrichtungen, Einrichtungen und Elemente bei einer praktischen Umsetzung der vorliegenden Erfindung selbstverständlich nicht als getrennte Vorrichtungen, Einrichtungen und Elemente vorhanden sein. Die Funktionen verschiedener Vorrichtungen, Einrichtungen und Elemente können beispielsweise von einer einzigen oder einen geringen Anzahl an Vorrichtung übernommen werden. Beispielsweise können die Funktionen einer Steuervorrichtung der Fahrzeuglenkvorrichtung und einer Steuervorrichtung der Überlagerungslenkvorrichtung in Bezug auf die Hardware und/oder in Bezug auf die Software von einer einzigen Vorrichtung übernommen werden.

**Patentansprüche**

1. Verfahren zum automatisierten Einparken eines mit einem aktiven Parklenkassistenzsystem und einer Überlagerungslenkvorrichtung (3) ausgestatteten Kraftfahrzeugs mit den Schritten:

   (a) Ermittlung eines aktuellen Radwinkels oder eines aktuellen Lenkradwinkels des Kraftfahrzeugs;
   (b) Erzeugung einer dynamischen Winkelvorgabe durch das Parklenkassistenzsystem und Übergabe der dynamischen Winkelvorgabe als Eingangssignal für eine Steuervorrichtung der Fahrzeuglenkvorrichtung und für eine Steuervorrichtung der Überlagerungslenkvorrichtung (3);
   (c) Steuern der Fahrzeuglenkvorrichtung derart, dass der Radwinkel entsprechend der dynamischen Winkelvorgabe geändert wird;
   (d) Steuern der Überlagerungslenkvorrichtung (3) derart, dass ein Überlagerungswinkel erzeugt wird, durch den die durch die Steuerung der Fahrzeuglenkvorrichtung eigentlich bewirkte Änderung des Lenkradwinkels zumindest teilweise kompensiert wird, und

   **gekennzeichnet durch** den folgenden Schritt:

   (e) bei einem Abbruch oder nach einer Beendigung des automatisierten Einparkvorgangs die Überlagerungslenkvorrichtung (3) derart gesteuert wird, dass ein Fehlwinkel zwischen Lenkradwinkel und Radwinkel **durch** eine Winkelsynchronisation abgebaut wird, wobei bis zum vollständigen Abbau des Fehlwinkels zwischen Lenkradwinkel und Radwinkel

   (m) einem Fahrer des Kraftfahrzeugs eine Warnung signalisiert wird;
   (n) einem Fahrer des Kraftfahrzeugs der aktuelle Radwinkel signalisiert wird; und/oder
   (o) ein Anfahren des Fahrzeugs verhindert wird.

2. Verfahren nach Anspruch 1,
   **dadurch gekennzeichnet, dass**
   die Fahrzeuglenkvorrichtung eine Servolenkvorrichtung ist.

3. Verfahren nach Anspruch 1 oder 2,
   **dadurch gekennzeichnet, dass**
   zur zumindest teilweisen Kompensation des durch die Steuerung der Fahrzeuglenkvorrichtung eigentlich bewirkten Änderung des Lenkradwinkels die Überlagerungslenkvorrichtung (3) derart gesteuert wird, dass die dynamische Winkelvorgabe

   (f) komplett;
   (g) teilweise und linear; oder
   (h) komplett oder teilweise in Abhängigkeit eines ein- oder mehrdimensionalen Kennfeldes kompensiert wird.

4. Verfahren nach einem der vorhergehenden Ansprüche,
   **dadurch gekennzeichnet, dass**
   der Fehlwinkel mittels

   (i) einer sofortigen Rückgängigmachung der Kompensation des Fehlwinkels;
   (k) einem automatisierten Abrampen des Fehlwinke4ls mittels einer definierten Traktorie; oder
   (l) einer Synchronisierungsfunktion in Abhängigkeit von Lenkbewegungen am Lenkrad abgebaut wird.

5. Kraftfahrzeug mit einem aktiven Parklenkassistenzsystem und einer Überlagerungslenkvorrichtung (3), wobei

   (a') das Parklenkassistenzsystem dazu eingerichtet ist, eine dynamische Winkelvorgabe zu erzeugen und diese als Eingangssignal für eine Steuervorrichtung der Fahrzeuglenkvorrichtung und für eine Steuervorrichtung der Überlagerungslenkvorrichtung (3) zu übergeben;

(b') die Steuervorrichtung für die Fahrzeuglenkvorrichtung dazu eingerichtet ist, die Fahrzeuglenkvorrichtung derart zu steuern, dass der Radwinkel durch die Fahrzeuglenkvorrichtung entsprechend der dynamischen Winkelvorgabe geändert wird;

(c') die Steuervorrichtung für die Überlagerungslenkvorrichtung (3) dazu eingerichtet ist, die Überlagerungslenkvorrichtung (3) derart zu steuern, dass durch die Überlagerungslenkvorrichtung (3) ein Überlagerungswinkel erzeugt wird, durch den die durch die Steuerung der Fahrzeuglenkvorrichtung eigentlich bewirkte Änderung des Lenkradwinkels zumindest teilweise kompensiert wird; und **dadurch gekennzeichnet, dass**

(e') die Steuervorrichtung für die Überlagerungslenkvorrichtung (3) dazu eingerichtet ist, bei einem Abbruch oder nach einer Beendigung des automatisierten Einparkvorgangs die Überlagerungslenkvorrichtung (3) derart zu steuern, dass der Fehlwinkel zwischen Lenkradwinkel und Radwinkel durch eine Winkelsynchronisation abgebaut wird, wobei das Fahrzeug weiter dazu eingerichtet ist, bis zum vollständigen Abbau des Fehlwinkels zwischen Lenkradwinkel und Radwinkel

(m') einem Fahrer des Kraftfahrzeugs eine Warnung zu signalisieren;
(n') einem Fahrer des Kraftfahrzeugs den aktuellen Radwinkel zu signalisieren; und/oder (o') ein Anfahren des Fahrzeugs zu verhindern.

6. Kraftfahrzeug nach Anspruch 5,
   **dadurch gekennzeichnet, dass**
   die Fahrzeuglenkvorrichtung eine Servolenkvorrichtung ist.

7. Kraftfahrzeug nach Anspruch 5 oder 6,
   **dadurch gekennzeichnet, dass**
   die Steuervorrichtung für die Überlagerungslenkvorrichtung (3) dazu eingerichtet ist, zur zumindest teilweisen Kompensation des durch die Steuerung der Fahrzeuglenkvorrichtung eigentlich bewirkten Änderung des Lenkradwinkels die Überlagerungslenkvorrichtung (3) derart anzusteuern, dass die dynamische Winkelvorgabe

   (f') komplett;
   (g') teilweise und linear; oder
   (h') komplett oder teilweise in Abhängigkeit eines ein- oder mehrdimensionalen Kennfeldes kompensiert wird.

8. Kraftfahrzeug nach einem der Ansprüche 5 bis 8,
   **dadurch gekennzeichnet, dass**
   die Steuervorrichtung für die Überlagerungslenkvorrichtung (3) dazu eingerichtet ist, die Überlagerungslenkvorrichtung (3) derart zu steuern, das der Fehlwinkel mittels

   (i') einer sofortigen Aufhebung der Kompensation der dynamischen Winkelvorgabe;
   (k') einem automatisierten Abrampen des Fehlwinkels mittels einer definierten Traktorie; oder
   (l') einer Synchronisierungsfunktion in Abhängigkeit von Lenkbewegungen am Lenkrad abgebaut wird.

9. Computerprogrammprodukt mit einem Computerprogramm, das Programmcodemitteln zur Durchführung eines Verfahrens nach einem der Ansprüche 1 bis 4 aufweist, wenn das Computerprogramm in einem Mikroprozessor ausgeführt wird.

**Claims**

1. A method for the automated parking of a vehicle fitted with an active parking assist system and a superimposed steering device (3), with the following steps:

   (a) Determination of a current wheel angle or a current steering wheel angle of the vehicle;
   (b) Generation of a dynamic angle specification by means of the parking assist system and transmission of the dynamic angle specification as an input signal for a control device of the vehicle steering device and for a control device of the superimposed steering device (3) ;
   (c) Control of the vehicle steering device, such that the wheel angle is modified in accordance with the dynamic angle specification;
   (d) Control of the superimposed steering device (3), such that a superimposed angle is generated, through which the modification of the steering wheel angle, which is actually brought about by means of the control of the vehicle steering device, is at least partially compensated for, and

**characterised by** the following step:

(e) When the automated parking procedure is aborted or after it has ended, the superimposed steering device (3) is controlled, such that an incorrect angle between steering wheel angle and wheel angle is reduced by an angle synchronisation, wherein, until the reduction of the incorrect angle between steering wheel angle and wheel angle is complete,

(m) a warning signal is given to a driver of the vehicle;
(n) the current wheel angle is indicated to a driver of the vehicle; and/or
(o) an approach of the vehicle is prevented.

2. The method according to claim 1,
**characterised in that**
the vehicle steering device is a power-steering device.

3. The method according to claim 1 or 2,
**characterised in that**,
to compensate at least partially for the amendment of the steering wheel angle, which is actually brought about by the control of the vehicle steering device, the superimposed steering device (3) is controlled, such that the dynamic angle specification is

(f) completely;
(g) partially and linearly; or
(h) completely or partially compensated for, depending on a one-dimensional or multi-dimensional map.

4. The method according to one of the previous claims, **characterised in that**
the incorrect angle is reduced by means of

(i) an immediate reversion of the compensation for the incorrect angle;
(k) an automated reduction of the ramp of the incorrect angle by means of a defined tractory; or
(1) a synchronising function depending on steering movements at the steering wheel.

5. A vehicle with an active parking assist system and a superimposed steering device (3)

(a') the parking assist system being adapted to generate a dynamic angle specification and to transmit this as an input signal for a control device of the vehicle steering device and for a control device of the superimposed steering device (3);
(b') the control device for the vehicle steering device being adapted to control the vehicle steering device, such that the wheel angle is modified by means of the vehicle steering device in accordance with the dynamic angle specification;
(c') the control device for the superimposed steering device (3) being adapted to control the superimposed steering device (3), such that a superimposed angle is generated by means of the superimposed steering device (3), through which the modification of the steering wheel angle, which is actually brought about by the control of the vehicle steering device, is at least partially compensated for; and, **characterised in that**,
(e') when the automated parking procedure is aborted or after it has been ended, the control device for the superimposed steering device (3) is adapted to control the superimposed steering device (3), such that the incorrect angle between steering wheel angle and wheel angle is reduced by an angle synchronisation, wherein, until the reduction of the incorrect angle between steering wheel angle and wheel angle is complete, the vehicle is further adapted to

(m') give a warning signal to a driver of the vehicle;
(n') indicate the current wheel angle to a driver of the vehicle; and/or
(o') prevent an approach of the vehicle.

6. The vehicle according to claim 5,
**characterised in that**

the vehicle steering device is a power-steering device.

7. The vehicle according to claim 5 or 6,
   **characterised in that**,
   to at least partially compensate for the modification of the steering wheel angle, which is actually brought about by the control of the vehicle steering device, the control device for the superimposed steering device (3) is adapted to control the superimposed steering device (3), such that the dynamic angle specification is

   (f') completely;
   (g') partially and linearly; or
   (h') completely or partially compensated for, depending on a one-dimensional or multi-dimensional map.

8. The vehicle according to one of claims 5 to 8, **characterised in that**
   the control device for the superimposed steering device (3) is adapted to control the superimposed steering device (3), such that the incorrect angle is reduced by means of

   (i') an immediate suspension of the compensation for the dynamic angle specification;
   (k') an automated reduction of the ramp of the incorrect angle by means of a defined tractory; or
   (l') a synchronising function depending on steering movements at the steering wheel.

9. A computer program product with a computer program which has program code means for carrying out a method according to one of claims 1 to 4 when the computer program is executed in a microprocessor.

## Revendications

1. Procédé pour le stationnement automatisé d'un véhicule automobile équipé d'un système d'aide au stationnement actif et d'un dispositif de direction à superposition (3), avec les étapes :

   (a) détermination d'un angle de roue actuel ou d'un angle de volant actuel du véhicule automobile ;
   (b) production d'une prescription d'angle dynamique par le système d'aide au stationnement et transmission de la prescription d'angle dynamique comme signal d'entrée pour un dispositif de commande du dispositif de direction de véhicule et pour un dispositif de commande du dispositif de direction à superposition (3) ;
   (c) commande du dispositif de direction de véhicule de telle sorte que l'angle de roue est modifié en fonction de la prescription d'angle dynamique ;
   (d) commande du dispositif de direction à superposition (3) de manière à produire un angle de superposition par lequel la modification d'angle de volant effectivement provoquée par la commande du dispositif de direction de véhicule est au moins partiellement compensée ;

   **caractérisé par** l'étape suivante :

   (e) lorsque l'opération de stationnement automatisé est interrompue ou terminée, le dispositif de direction à superposition (3) est commandé de telle sorte qu'une erreur d'angle entre angle de volant et angle de roue est annulée par une synchronisation d'angle et ce faisant, jusqu'à l'annulation complète de l'erreur d'angle entre angle de volant et angle de roue,

   (m) un avertissement est transmis à un conducteur du véhicule automobile ;
   (n) l'angle de roue actuel est transmis à un conducteur du véhicule automobile ; et/ou
   (o) un démarrage du véhicule est empêché.

2. Procédé selon la revendication 1, **caractérisé en ce que** le dispositif de direction de véhicule est un dispositif de direction assistée.

3. Procédé selon la revendication 1 ou 2, **caractérisé en ce que**, pour la compensation au moins partielle de la modification d'angle de volant effectivement provoquée par la commande du dispositif de direction de véhicule, le dispositif de direction à superposition (3) est commandé de telle sorte que la prescription d'angle dynamique est compensée

(f) complètement ;
(g) partiellement et linéairement ; ou
(h) complètement ou partiellement en fonction d'une courbe de caractéristiques à une ou plusieurs dimensions.

4. Procédé selon l'une des revendications précédentes, **caractérisé en ce que** l'erreur d'angle est annulée au moyen

(i) d'une annulation immédiate de la compensation de l'erreur d'angle ;
(k) d'une diminution progressive automatisée de l'erreur d'angle au moyen d'une trajectoire définie ; ou
(1) d'une fonction de synchronisation en fonction de mouvements de direction sur le volant.

5. Véhicule automobile avec un système d'aide au stationnement actif et avec un dispositif de direction à superposition (3),

(a') le système d'aide au stationnement étant conçu pour produire une prescription d'angle dynamique et pour transmettre celle-ci comme signal d'entrée pour un dispositif de commande du dispositif de direction de véhicule et pour un dispositif de commande du dispositif de direction à superposition (3) ;
(b') le dispositif de commande pour le dispositif de direction de véhicule étant conçu pour commander le dispositif de direction de véhicule de telle sorte que l'angle de roue est modifié par le dispositif de direction de véhicule en fonction de la prescription d'angle dynamique ;
(c') le dispositif de commande pour le dispositif de direction à superposition (3) étant conçu pour commander le dispositif de direction à superposition (3) de telle sorte que le dispositif de direction à superposition (3) produit un angle de superposition par lequel la modification d'angle de volant effectivement provoquée par la commande du dispositif de direction de véhicule est au moins partiellement compensée ;

**caractérisé en ce que**

(e') le dispositif de commande pour le dispositif de direction à superposition (3) est conçu pour, lorsque l'opération de stationnement automatisé est interrompue ou terminée, commander le dispositif de direction à superposition (3) de telle sorte que l'erreur d'angle entre angle de volant et angle de roue est annulée par une synchronisation d'angle, le véhicule étant aussi conçu pour, jusqu'à l'annulation complète de l'erreur d'angle entre angle de volant et angle de roue,

(m') transmettre un avertissement à un conducteur du véhicule automobile ;
(n') transmettre l'angle de roue actuel à un conducteur du véhicule automobile ; et/ou (o') empêcher un démarrage du véhicule.

6. Véhicule automobile selon la revendication 5, **caractérisé en ce que** le dispositif de direction de véhicule est un dispositif de direction assistée.

7. Véhicule automobile selon la revendication 5 ou 6, **caractérisé en ce que** le dispositif de commande pour le dispositif de direction à superposition (3) est conçu pour commander le dispositif de direction à superposition (3) pour la compensation au moins partielle de la modification d'angle de volant effectivement provoquée par la commande du dispositif de direction de véhicule de telle sorte que la prescription d'angle dynamique est compensée

(f') complètement ;
(g') partiellement et linéairement ; ou
(h') complètement ou partiellement en fonction d'une courbe de caractéristiques à une ou plusieurs dimensions.

8. Véhicule automobile selon l'une des revendications 5 à 8, **caractérisé en ce que** le dispositif de commande pour le dispositif de direction à superposition (3) est conçu pour commander le dispositif de direction à superposition (3) de telle sorte que l'erreur d'angle est annulée au moyen

(i') d'une annulation immédiate de la compensation de la prescription d'angle dynamique ;
(k') d'une diminution progressive automatisée de l'erreur d'angle au moyen d'une trajectoire définie ; ou
(l') d'une fonction de synchronisation en fonction de mouvements de direction sur le volant.

9. Produit de programme informatique avec un programme informatique qui comporte des moyens formant code de programme pour la mise en oeuvre d'un procédé selon l'une des revendications 1 à 4, lorsque le programme informatique est réalisé dans un microprocesseur.

1, (a)

2

(e)    3, (c), (d), [(b)]

4, (f)

(h)    (h)
(g)

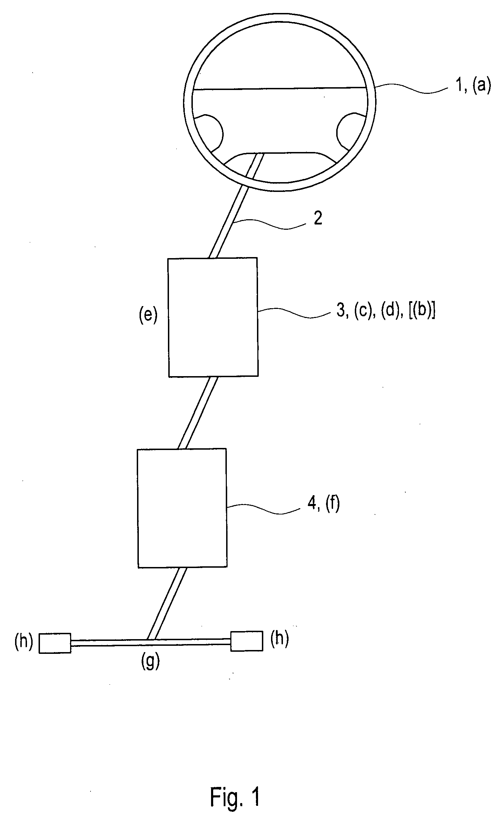

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006052575 A1
- DE 102005005425 A1
- EP 2316708 A1
- DE 102005008652 A1
- DE 102006049181 A1
- DE 102006023562 A1
- DE 102007000976 A1
- DE 102006023562 B4